# EUROPÄISCHE PATENTSCHRIFT

(11) **EP 2 978 958 B1**
(45) Veröffentlichungstag und Bekanntmachung des Hinweises auf die Patenterteilung: **31.12.2025**
(21) Anmeldenummer: 14701912.9
(22) Anmeldetag: 20.01.2014
(51) Int. Cl.: F02D 41/00, F02D 19/02, F02D 41/14, F02D 19/10, F02B 29/04, F02B 37/16, F02M 21/04, F02M 26/04, F02M 43/00

(54) **VERFAHREN UND VORRICHTUNG ZUM BETRIEB EINER GAS-BRENNKRAFTMASCHINE**
METHOD AND DEVICE FOR OPERATING A GAS INTERNAL COMBUSTION ENGINE
PROCÉDÉ ET DISPOSITIF DE FONCTIONNEMENT D'UNE TURBINE À GAZ

(30) Priorität: 28.03.2013 DE 102013205722
(43) Veröffentlichungstag der Anmeldung: 03.02.2016
(73) Patentinhaber: Rolls-Royce Solutions GmbH, 88045 Friedrichshafen (DE)
(72) Erfinder: FLOHR, Andreas, 88693 Untersiggingen (DE); GELLER, Andreas, 89073 Ulm (DE)
(74) Vertreter: Eisenführ Speiser
(86) Internationale Anmeldenummer: PCT/EP2014/000142
(87) Internationale Veröffentlichungsnummer: WO 2014/154314

(56) Entgegenhaltungen:
- EP-A1- 2 199 580
- EP-A2- 1 878 900
- WO-A1-2011/000474
- WO-A2-2005/028837
- DE-B3- 102007 045 195
- DE-B3- 102007 056 623

## Beschreibung

Die Erfindung betrifft ein Verfahren zum Betrieb einer Gas-Brennkraftmaschine mit einem Gasmischer, einer Ansaugstrecke und einem Motor mit einer Anzahl von Zylindern. Die Erfindung betrifft weiter eine Regelung für die Brennkraftmaschine nach dem Oberbegriff des Anspruchs 13 und eine Brennkraftmaschine nach dem Oberbegriff des Anspruchs 14. Die Gas-Brennkraftmaschine weist in der Ansaugstrecke weiter eine Aufladung und eine Bypass-Strecke zur Umgehung der Aufladung auf. Insbesbesondere ist die Gas-Brennkraftmaschine eine funkengezündete Gas-Brennkraftmaschine.

Anwendungsfelder dieser Art von Gas-Brennkraftmaschinen sind mobile Anwendungen --wie beispielsweise im Schifffahrtsbereich oder im Nutz- und Schwerkraftfahrzeugbereich-- als auch stationäre Anwendungen wie bei Blockkraftwerken, die insbesondere für eine schwankende Gasversorgung vorteilhaft auszulegen sind.

US 6,131,552 offenbart allgemein ein Brennstoffsteuersystem, welches die Zuführung von Gas zu einer Mischkammer in Abhängigkeit eines gemessenen Betriebszustandes des Motors regeln kann. Das Steuerverfahren der US 6,131,552 A oder andere nur lastabhängige Gasdosierungen erweisen sich auch bei komplexen Regelsystemen als unzureichend.

Ein solches Verfahren ist in WO 2011/000474 A1 beschrieben; dort ist ein Verfahren zur Regelung eines Gasmotors mit Generator beschrieben, bei dem ein Reglermoment über einen Drehzahlregler aus einer Drehzahl- Regelabweichung berechnet wird, bei dem ein Soll-Volumenstrom zumindest in Abhängigkeit des Reglermoments berechnet wird. Dabei wird eine Abweichung des Reglermoments zu einem Generatormoment berechnet und ein Soll-Receiverrohrdruck wird an Hand der Abweichung korrigiert.

Andere ähnliche Verfahren, bei denen eine Drehzahl-Regelabweichung aus einer Soll-Drehzahl sowie einer Ist-Drehzahl berechnet wird, sind in DE 10 2007 045 195 B3 und DE 10 2007 056 623 B3 beschrieben.

Üblicherweise ist ein Luftaufwand ein Maß für die einem Verbrennungsmotor zugeführte gasförmige Frischladung einer Ladeluft in einem Ladegemisch, wobei der Luftaufwand auch eine Aussage über die Qualität des Ansaugsystems und des Ansaugprozesses zulässt. Der tatsächliche Luftaufwand stellt regelmäßig das Verhältnis der tatsächlich dem Motor, bzw. einem Zylinder desselben, während eines Arbeitsspiels zugeführte Masse an Frischluft in einem Ladegemisch dar. Diese reale Gemischmasse wird bezogen auf die theoretische Frischladungsmasse, ermittelt aus dem geometrischem Hubvolumen und der theoretischen Ladungsdichte bei Umgebungszustand (bei frei ansaugenden Motoren) bzw. bei aufgeladenen Motoren wird hier der Zustand der Frischladung hinter dem Verdichter oder hinter dem Ladeluftkühler berücksichtigt.

Auf die einem Zylinder zugeführte Frischladung üben eine Reihe von Faktoren Einfluss aus, wie zum Beispiel die Ventilsteuerzeiten oder der Öffnungsquerschnitt der Ventile. Grundsätzlich kann diese aus einem Modul zur Bestimmung der Motoraufladung bestimmt werden, dem ein Ansaugstreckenmodell hinterlegt ist. Tatsächlich entspricht die dem Motor zugeführte Frischladung in einem Ladegemisch aber nur in Ausnahmefällen der theoretischen. Der Luftaufwand ist keine für einen Motor konstante Zahl, sondern ist in starkem Maße von der Drehzahl und den vorliegenden geometrischen Verhältnissen von Ansaugtrakt und Brennraum abhängig; zur Bewältigung dieser Abhängigkeit kann z. B. ein geeignetes Kennfeld Berücksichtigung finden.

Ansaugstreckenmodelle wiederum sind in Motorreglern grundsätzlich bei allgemeinen Brennkraftmaschinen, wie z. B. aus EP 1 398 490 A2, bekannt. Diesen ist gemeinsam, dass unter Modellierung der Ansaugstrecke --im einfachsten Fall als homogener Druckbehälter um die dynamischen Vorgange im Luftpfad zu erfassen-- als weit verbreitete Grundidee, das Speicherverhalten der Ansaugstrecke (auch als Saugrohr bezeichnet) über die Befüll- und Entleermethode modelliert wird. Dabei wird das Saugrohr als Druckbehälter behandelt, der durch eine Drosselklappe kontinuierlich mit Luft gefüllt wird und aus dem der Motor durch sein Saugverhalten entsprechend dem Arbeitstakt über das Einlassventil Luft abgesaugt.

Es zeigt sich jedoch, dass eine Brennstoffversorgung einer Gas-Brennkraftmaschine, insbesondere im transienten Betriebsbereich der Brennkraftmaschine und bei variablen Brennstoffqualitäten, noch sehr viel komplexer ist. Insbesondere zeigt sich bei Gas-Brennkraftmaschinen, insbesondere zur Ausbildung einer funkengezündete Gas-Brennkraftmaschine, dass der Betrieb im Niedriglastbereich und/oder im transienten Lastbereich problematisch sein kann.

Beim Betrieb von Gasmotoren findet die Gemischbildung üblicherweise vor dem Verdichter der Abgasturboaufladung statt. Gleichzeitig besteht die Ansaugstrecke zwischen Verdichteraustritt und Brennraumeintritt aus teilweise großen Volumina, die dadurch signifikante Gemischmassen speichern oder abgeben. Dies gilt insbesondere dann, wenn es bei Last- und/oder Drehzahländerungen des Motors zu Druck und/oder Temperaturänderungen in den einzelnen Teilvolumina kommt. Als Folge einer aber nur bedingt auf den Betriebspunkt angepassten --weil insbesondere wegen der teilweise großen Volumina ungenauen-- Gemischmassenbildung bei einer Gas-Brennkraftmaschine sind hohe Kohlenwasserstoffemissionen (HC Emission) oder andere erhöhte Emissionen (NOx, CO, Partikel etc.) als auch schlechte Wirkungsgrade durch unverbranntes Brenngas zu erwarten.

Wünschenswert ist es, einen Gas-Betrieb einer Gas-Brennkraftmaschine, insbesondere im transienten entsprechend der Lastanforderungen als auch Emissionsbedingungen vorteilhafter zu gestalten. Wünschenswert ist es insbesondere dies wenigstens im Niedriglastbereich umzusetzen. Insbesondere ist es wünschenswert dies im vollen Lastbereich, d. h. vorzugsweise bis 100%, umzusetzen.

An dieser Stelle setzt die Erfindung an, deren Aufgabe es ist, ein Verfahren und eine Vorrichtung anzugeben, mittels der ein verbesserter Betrieb einer Brennkraftmaschine als eine Gas-Brennkraftmaschine erreicht wird. Insbesondere ist es Aufgabe der Erfindung, eine Verbesserung im transienten Betrieb und/oder eine Verbesserung im Emissionsbereich zu erreichen. Vorzugsweise soll ein im Niedriglastbereich bestehendes Problem einer Brennstoffzusammensetzung in verbesserter Weise gelöst werden, insbesondere unter Vermeidung von Drehmomentsprüngen eines Motors im weiteren transienten Betrieb, auch bei sich verändernden Lastanforderungen und möglichst unter Vermeidung von übermäßigen Emissionen. Insbesondere sollte eine Gemischmassenbildung möglichst vorteilhaft gestaltbar sein. Insbesondere sollte ein Luftwaufwand des Motors in verbesserter Weise gestaltbar sein. Aufgabe der Erfindung ist es insbesondere, wenigstens eines der oben beschriebenen Probleme zu adressieren. Zumindest soll eine alternative Lösung vorgeschlagen werden.

Die Aufgabe betreffend das Verfahren wird durch die Erfindung mit einem Verfahren gemäß dem Anspruch 1 gelöst.

Insbesondere wird dabei ausgegangen von einem Verfahren der eingangs genannten Art zum Betrieb einer Gas-Brennkraftmaschine, mit einem Gasmischer, einer Ansaugstrecke und einem Motor mit einer Anzahl von Zylindern, wobei in dem Verfahren
- dem Motor ein Brennstoff-Gemisch umfassend ein Ladegemisch zugeführt wird und der Motor im Gasbetrieb mit Gas als Brennstoff in dem Ladegemisch betrieben wird.

Weiter ist vorgesehen, dass mittels einem wenigstens einem früheren Gemischzustand zugeordneten Eingabe-Gemischanteil eines Gas-Luft-Gemisches, ein einem späteren Gemischzustand zugeordneter Ausgabe-Gemischanteil des Gas-Luft-Gemisches bestimmt wird, und wobei die Bestimmung mittels einem als Basis eines Rechenmodells für die Ansaugstrecke dienenden Ansaugstreckenmodell erfolgt.

Erfindungsgemäß ist vorgesehen, dass der Ausgabe-Gemischanteil des Gas-Luft-Gemisches an einer Motorzuführung bestimmt wird und der Eingabe-Gemischanteil vom Ausgabe-Gemischanteil über eine Anzahl von Zwischenzuständen des Gemischanteils in einer Anzahl von zugeordneten Volumen der Ansaugstrecke bestimmt wird. Dazu wird der Eingabe-Gemischanteil eines Gas-Luft-Gemisches am Gasmischer bestimmt und nach Maßgabe des Eingabe-Gemischanteils ein Luftstrom und/oder ein Gasstrom am Gasmischer eingestellt.

Die Erfindung geht von der Überlegung aus, dass ein vorteilhafter transienter Betrieb einer Gas-Brennkraftmaschine möglichst unter Berücksichtigung eines Zustandsdrucks der Ansaugstrecke, insbesondere unter Berücksichtigung einer Androsselung der Ladeluft bzw. des Brennstoffgemisches, und/oder unter möglichst verbesserter Berücksichtigung des Luftaufwandes erfolgen sollte, wobei die Besonderheiten eines Gasmotors zu berücksichtigen sind. Zwar sind Ansaugstreckenmodelle in Motorreglern grundsätzlich bekannt. Jedoch geht die Erfindung von der Überlagung aus, dass gerade für die Anwendung des Gasmotors, insbesondere mit Gemischbildung vor einem Verdichter, die eingangs genannte Modellierung bereits im Ansatz unzureichend ist.

Die Erfindung berücksichtigt erstmals die Überlegung, dass bei einem Gasmotor eine Strecke zwischen dem Ort der Gemischbildung, z. B. vor dem Verdichter der Abgasturboaufladung, und Ort eines Brennraumeintritts vergleichsweise lang sein kann und damit per se ein vergleichsweise großes Volumen umfasst, das kaum realistisch in einem stationären Zustand beschreibbar ist. Auch berücksichtigt die Erfindung erstmals, dass bei einem Gasmotor die Ansaugstrecke zwischen Verdichteraustritt und Brennraumeintritt aus teilweise großen Volumina besteht, die signifikante Gemischmassen speichern oder abgeben, wenn es bei Last- und/oder Drehzahländerung des Motors zu Druck und/oder Temperaturänderungen in den einzelnen Teilvolumina kommt.

Die Erfindung hat erkannt, dass deshalb --speziell bei einem Gasmotor-- der Gemischmassenstrom am Austritt des Gasmischers zeitweise von dem am Brennraumeintritt entkoppelt ist. Dieser Umstand findet bislang keine ausreichende Berücksichtigung in Ansaugstreckenmodellen, insbesondere nicht für einen Gasmotor. Insbesondere sind übliche stationäre Betrachtungen eines Gasmotors, bei denen nur der Gemischdruck vor Zylinder beachtet wird, daher --wie von der Erfindung erkannt-- nicht zielführend, um die Einhaltung definierter Verbrennungsluftverhältnisse zu gewährleisten. Damit dient das Konzept der Erfindung dazu, einen hinsichtlich Verlässlichkeit verbesserten und für einen transienten Betrieb besser angepassten Gemischmassensensor zur Verfügung zu stellen, insbesondere einen virtuellen Gemischmassensensor für die Gemischbildung vor dem Verdichter.

Die Aufgabe betreffend die Vorrichtung wird mit der Erfindung gelöst durch eine Regelvorrichtung für eine Gas-Brennkraftmaschine gemäß dem Anspruch 13.

Die Brennkraftmaschine weist einen Motor mit einer Anzahl von Zylindern und einem Ansaugsystem mit dem Gasmischer und der Ansaugstrecke auf. Weiter ist der Anzahl von Zylindern strömungsaufwärts vor den Zylindern ein Receivervolumen vorgeordnet, das beispielsweise in Form eines Krümmers oder einer Mischstrecke oder dergleichen ausgeführt werden kann.

Insbesondere hat es sich als vorteilhaft erwiesen, die Gas-Brennkraftmaschine mit einer Aufladung im Ansaugsystem zu versehen, insbesondere mit einer Aufladung umfassend einen Ladewärmetauscher. Je nach Dimensionierung der Gas-Brennkraftmaschine, insbesondere auf Basis eines Großmotors, kann eine Aufladung ein- oder zweistufig, vorzugsweise mit einer Abgasrückführung versehen sein. Insbesondere kann weiter eine Bypass-Strecke zur Ansaugstrecke des Ansaugsystems vorgesehen sein zur Umgehung der Aufladung.

Wie sich insbesondere in Kreisprozeßsimulationen und Versuchen an Gasmotoren zeigt, verbessert die Erfindung die Stabilität des Verbrennungsluftverhältnisses vor allem bei transientem Motorbetrieb (Lastauf-/-abschaltungen), sodass zum einen größere Lastsprünge dargestellt werden können und zum anderen eine einfachere Abstimmung des Lastschaltbetriebs, auch am Prüfstand, möglich wird. Desweiteren ist der Einsatz eines virtuellen Gassensors gemäß dem Konzept der Erfindung dem Erreichen gegenwärtiger und zukünftiger Abgasnormen zuträglich.

Diese und andere vorteilhafte Weiterbildungen der Erfindung sind den Unteransprüchen zu entnehmen und geben im Einzelnen vorteilhafte Möglichkeiten an, das Konzept der Erfindung im Rahmen der Weiterbildungen und unter Angabe weiterer Vorteile zu realisieren.

Vorteilhaft kann am Gasmischer nach Maßgabe des Eingabe-Gemischanteils, insbesondere eines Gemischmassenstroms, ein Luftstrom und/oder ein Gasstrom eingestellt werden im Rahmen einer simultanen Echtzeit-Rechnung. Im Rahmen einer besonders bevorzugten Weiterbildung ist im Ansatz gewährleistet, dass am Gasmischer nach Maßgabe des Eingabe-Gemischanteils ein Luftstrom und/oder ein Gasstrom im Rahmen einer simultanen Echtzeit-Bestimmung eingestellt wird. Insbesondere wird ein Gemischmassensensor gemäß dem Konzept als ein virtueller Gemischmassensensor dargestellt, der vorteilhaft den Gemischmassenstrom am Gasmischeraustritt liefert; dies mit Vorteil gegenüber bisherigen Ansätzen.

Erfindungsgemäß wird der Eingabe-Gemischanteil des Gas-Luft-Gemisches an einem Ausgang des Gasmischers bestimmt, und der Ausgabe-Gemischanteil des Gas-Luft-Gemisches an einem Zylinder oder einem Zylindereingang des Motors bestimmt, insbesondere an einem Receiver bestimmt.

Besonders vorteilhaft ist der Zustandsdruck vor einem Zylinder des Motors bestimmt, vorzugsweise als ein Receiverdruck in Receivervolumen und unter einem Receivervolumen ist jede Art eines Volumens zu verstehen, das dem Zylinder in strömungsaufwärtiger Richtung vorgeordnet und eine Aufladung und/oder einer Bypass-Strecke in strömungsabwärtiger Richtung nachgeordnet ist. Beispielsweise kann ein Receivervolumen das Volumen eines Krümmers oder einer sonstigen Bauraumerweiterung der Ansaugstrecke sein. Insbesondere ist unter einem Receivervolumen ein Volumen zu verstehen, dass über übliche Volumina einer Ansaugstrecke hinausgeht; es zeigt sich im Rahmen der Weiterbildung, dass die Vorgabe des Receiverdrucks im Receivervolumen besonders signifikant zur verlässlichen Regelung der Gas-Brennkraftmaschine ist, weil mit zunehmender Größe eines Receivervolumens eine zunehmende Unsicherheit im Zustand des Brenngasgemisches verknüpft ist. Eine Regelung auf den Receiverdruck im Receivervolumen beseitigt somit Unwägbarkeiten, die bei stationären Annahmen zu einer Ansaugstrecke bestehen.

Bevorzugt umfasst die Bestimmung eines Gemischanteils die Bestimmung eines Gemischmassenstromes, insbesondere mittels einer Durchflussgleichung für ein bestimmtes Volumen und/oder einer Komponente der Ansaugstrecke und/oder ein Drossel-Organ. Insbesondere ist dem Eingabe-Gemischanteil am Gasmischer ein Gemischmassenstrom und/oder dem Ausgabe-Gemischanteil ein Gemischmassenstrom zugeordnet. Insbesondere kann ein Gemischmassensstrom an einer Drossel bestimmt werden, wobei ein Durchfluss einer Rückströmung und/oder einer Aufladeströmung bestimmt wird. Dies kann bevorzugt mittels einer Durchflussgleichung kompressibler Medien an einer idealen oder realen Düse unter Annahme einer reibungsfreien oder reibungsbehafteten Strömung idealer oder realer Gase umgesetzt werden.

Bevorzugt umfasst die Bestimmung eines Gemischanteils zusätzlich oder alternativ die Bestimmung eines Gemischzustands, insbesondere wenigstens die Bestimmung einer Temperatur und/oder eines Zustandsdruckes des Gemischanteils für das Volumen der Ansaugstrecke. Vorzugsweise erfolgt dies mittels einer thermodynamischen Zustandsgleichung realer oder idealer Gase.

Es hat sich als vorteilhaft erwiesen einen Zustandsdruck in der Ansaugstrecke, z. B. in Grossvolumina oder als Druckverlust über Drosseln zu berücksichtigen. Aktuatoren derselben können zur Beeinflussung des Zustandsdrucks, wie beispielsweise an einer Drossel-Klappe, einem Drossel-Ventil oder anderen Drossel-Organen vorgesehen sein. Unter einem Drossel-Organ der Ansaugstrecke wird vorliegend jedes Mittel zur Druckreduzierung bzw. allgemein Druckregulierung angesehen, dazu kann ggf. neben einer Motor-Drossel auch eine Verdichter-Bypass-Drossel gehören. Insbesondere kann als Motor-Drossel auch ein Ventil, eine Klappe oder eine Drossel oder auch eine variable Turbinengeometrie eines Verdichters sein. Ein Anstellwinkel α zwischen vollständig geöffneter und vollständig geschlossener Stellung der Drossel wird hier allgemein genutzt, um eine Drosselstellung solcher Drossel-Organe zu beschreiben; es können auch mehrere Drossel-Organe der vorgenannten Art in Mehrzahl oder in Kombination verschiedener derselben unabhängig oder aufeinander abgestimmt eingesetzt werden.

Insbesondere kann eine Motor-Drossel stromaufwärts vor dem Receivervolumen und/oder eine Verdichterbypass-Drossel in der Bypass-Strecke vorgesehen sein. Es kann, insbesondere je nach Maßgabe eines SOLL- und/oder IST-Zustandsdrucks der Ansaugstrecke eine Androsselung der Ansaugstrecke, insbesondere zur Androsselung des Motors und/oder der Bypass-Strecke, vorgenommen werden.

In einer besonders bevorzugten Ausführungsform sieht eine Weiterbildung eine Aufteilung der Ansaugstrecke --d. h. zwischen Gasmischer und Motor-- in mehrere, insbesondere wenigstens zwei Volumina, vorzugsweise genau zwei Großvolumina, vor.

Dieser Ansatz hat sich bewährt, wobei insbesondere einer oder mehrere der folgenden Schritte genutzt wird:
- die Befüll- und Entleermethode (insbesondere unter Nutzung von Druck- und Temperaturinformationen u. a. von bereits vorhandenen Messstellen),
- eine Echtzeit-Berechnung der Gemischmassenströme an verschiedenen Stellen der Ansaugstrecke im Motorregler,
- eine Zumischung derjenigen Gasmischer durch eine Gaszumesseinheit, die zur virtuell bestimmten Gemischmasse im gewünschten Verbrennungsluftverhätnis führt.

Vorteilhaft wird dem Eingabe-Gemischanteil ein Verbrennungsluftverhältnis zugeordnet, insbesondere einem SOLL-Wert (Lambda_SOLL) desselben, wobei eine Gaszumesseinheit des Gasmischers mittels des stöchiometrischen Luftbedarfs (L_st) und/oder des Verbrennungsluftverhältnisses geführt wird. Diese Massnahme hat sich bewährt zur Steuerung eines Gasmischers.

Insbesondere kann die Bestimmung des Gemischanteils, insbesondere eines Gemischmassenstromes und/oder eines Gemischzustands eines Zwischenzustandes, im Volumen der Ansaugstrecke für eine Anzahl von theoretischen Rechenvolumen der Ansaugstrecke erfolgen und/oder erfindungsgemäß für eine Anzahl realer Gehäusevolumen der Ansaugstrecke erfolgen, wobei die Anzahl von Zwischenzuständen des Gemischanteils in der Ansaugstrecke einer Anzahl von wenigstens einem Grossvolumen der Ansaugstrecke zugeordnet sind. Dadurch lässt sich das Ansaugstreckenmodell besonders realistätsnah gestalten.

Erfindungsgemäß wird der Zustandsdruck --insbesondere virtuell, insbesondere simuliert und/oder gerechnet-- bestimmt aufgrund eines Rechenmodells der Ansaugstrecke umfassend wenigstens Rechenvolumina des Receivervolumens und des Lade-Wärmetauschers. Erfindungsgemäßist der Zustandsdruck als Receiverdruck in einem Receivervolumen vor einem Zylinder des Motors bestimmt, das dem Zylinder in strömungsaufwärtiger Richtung vorgeordnet und einer Aufladung und/oder einer Bypass-Strecke in strömungsabwärtiger Richtung nachgeordnet ist. Unter einem ein Ladewärmetauscher-Volumen ist grundsätzlich jede Art eines mit Temperaturaustausch behafteten Volumens zu verstehen; dies kann insbesondere Volumina der Ansaugstrecke und/oder der Motorzuführstrecke des Ansaugtraktes umfasssen. Die vorgenannten Volumina haben sich als besonders relevant zur Beschreibung der Ansaugstrecke erwiesen.

Die Anzahl von Grossvolumina der Ansaugstrecke umfasst ein oder mehrere Komponenten-Volumina der Ansaugstrecke, die ausgewählt sind aus der Gruppe umfassend: wenigstens ein, vorzugsweise zwei, Receivervolumen, wenigstens ein Zylindervolumen, insbesondere im Motorblock, wenigstens ein Ladewärmetauscher-Volumen, wenigstens ein Verdichter-Volumen.

Weiter bevorzugt umfasst die Anzahl von wenigstens einem Grossvolumina der Ansaugstrecke ein oder mehrere Komponenten-Volumina der Ansaugstrecke, die ausgewählt sind aus der Gruppe weiter umfassend: wenigstens ein Verdichterbypass-Volumen, insbesondere an einem Bypassrohrabschnitt und/oder einer Verdichterbypass-Klappe; wenigstens ein Ansaugstrecken-Volumen, insbesondere an einem Ansaugrohrabschnitt und/oder einer Motor- und/oder Eingangsdrosselklappe.

Bevorzugt ist der Gasbetrieb ein funkengezündeter Gasbetrieb; dieser erweist sich als besonders effizient und für viele Anwendungen als passend umsetzbar. Grundätzlich kann sich jedoch auch ein anderes Zündprinzip eignen, wie z. B. ein Zündsystem zur Diesel oder anderen Flüssigbrennstoff-Zündung. Insbesondere kann der Gasbetrieb alternativ auch ein Zündstrahlbetrieb mit externer Gemischbildung eines Gas-Luft-Gemisches sein und unter Verwendung eines Diesel-Zündstrahls oder eines anderen Flüssigbrennstoff-Zündstrahls.

Generell, auch wenn vorliegend nicht im Vordergrund beschrieben, besteht gleichwohl die Möglichkeit, nicht zuletzt wegen vergleichsweise konstanter Brennstoffqualität, die Gas-Brennkraftmaschine entweder mit Gas oder mit Flüssigbrennstoff wie Diesel oder verflüssigtem Gas zu betreiben. Im Betrieb wird dem Motor dann ein Brennstoff-Gemisch umfassend ein Ladegemisch und/oder einen Flüssigbrennstoff zugeführt. Dabei kann der Motor in einem ersten Betriebszustand im Dieselbetrieb --mit Diesel oder einem anderen Flüssigbrennstoff-- und in einem zweiten Betriebszustand im Gasbetrieb --mit Gas als Brennstoff in dem Ladegemischbetrieben werden. Diese Art von Gas-Brennkraftmaschinen werden auch als Mehrbrennstoff-Brennkraftmaschinen (Dual-Fuel- Brennkraftmaschinen) bezeichnet und können neben der bevorzugten Brennstoffwahl von Diesel und Gas auch mit verschiedensten anderen Brennstoffen betrieben werden. Insbesondere kann alternativ im Gasbetrieb die Gas-Brennkraftmaschine im Zündstrahlbetrieb mit externer Gemischbildung eines Gasluftgemisches und einem Dieselzündstrahl betrieben werden. So werden Motoren der Gas-Brennkraftmaschine auch als Zündstrahlmotoren bezeichnet und sind regelmäßig auf der Grundlage einer Dieselmotorenkonstruktion aufgebaut und zählen zu den neusten Technologien, insbesondere im Bereich umweltgerechter Einsatzmöglichkeiten von Großmotoren. Ein Zündstrahlmotor kann auch mit Flüssigkraftstoff wie Diesel oder anderem verflüssigten Kraftstoff wie verflüssigtem Naturgas (LNG) oder auch verflüssigtem Erdölgas (LPG) betrieben werden; zumeist kann eine Gas-Brennkraftmaschine einen Gas-Diesel-Motor zur Bildung einer Gas-Diesel-Brennkraftmaschine aufweisen.

Inbesondere weist eine Gas-Brennkraftmaschine dann ein Einspritzsystem auf, das sich vorzugsweise elektronisch regeln lässt. Insbesondere kann eine Brennkraftmaschine dazu weiter ein Einspritzsystem aufweisen, das vorteilhaft als ein Common-Rail-Einspritzsystem ausgebildet ist. Insbesondere lässt sich ein Einspritzsystem regeln für unterschiedliche Gasqualitäten, wie Biogas oder Erdgas, in flüssiger Form oder auch für den Einsatz von Ölen wie Pflanzenölen oder dergleichen als flüssiger Brennstoff eignet. Hier haben sich vor allem Common-Rail-Einspritzsysteme, ggf. aber auch Pumpe-Düse-Einspritzsysteme mit elektronischer Regelung, bewährt. Das Zündmedium, im Gasbetrieb, kann dem eigentlichen gasförmigen Brennstoff des Ladegemisches im Zylinder bei hoher Verdichtung zugegeben werden oder auch dem Ansaugkanal zugegeben werden. Die im Gasbetrieb, insbesondere funkengezündeten Gasbetrieb oder Zündstrahlbetrieb, mit externer Gemischbildung arbeitenden Gas-Motoren sind insgesamt flexibler in der Brennstoffverwendung und noch emissionsärmer.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in' der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und·beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

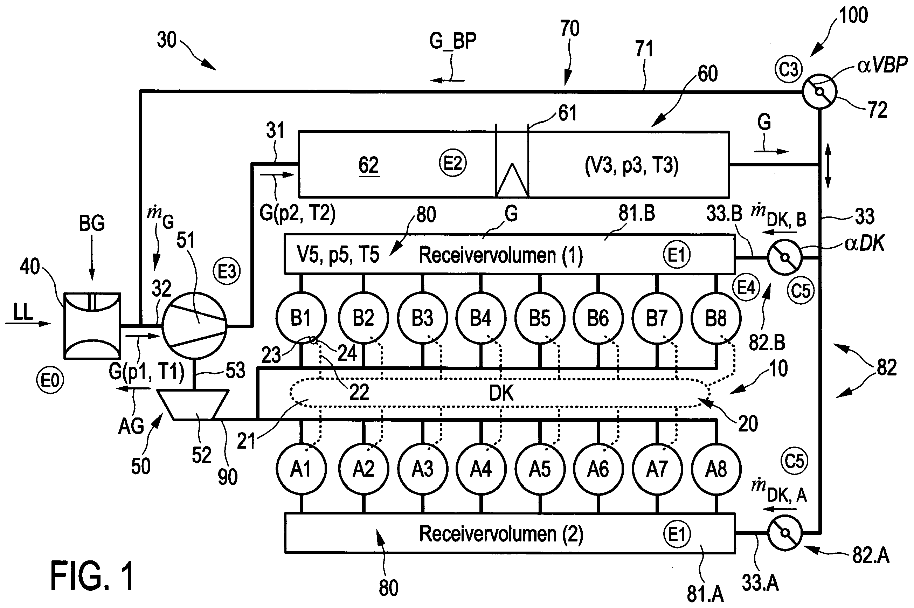

- Fig. 1: ein Schema einer Gas-Brennkraftmaschine mit einem Gasmischer sowie einer Ansaugstrecke mit Aufladung durch einen Turbolader und einen Ladewärmetauscher sowie einem Motor mit einer Anzahl von Zylindern nach einem Receivervolumen, wobei die Aufladung durch eine Bypasstrecke umgangen werden kann - die Gas-Brennkraftmaschine ist für einen funkengezündeten Gasbetrieb ausgelegt; in einer gestrichelt gezeigten Alternative kann die Gas-Brennkraftmaschine auch als Gas-Diesel-Brennkraftmaschine ausgelegt sein und im reinen Dieselbetrieb als auch im Mischbetrieb oder im reinen Gasbetrieb (z. B. als Zündstrahlbetrieb unter Einspritzung eines Zündgemisches in Form von Diesel) betreibbar sein, wobei das Einspritzsystem in Form eines gestrichelt dargestellten Common-Rail-Systems gebildet ist;

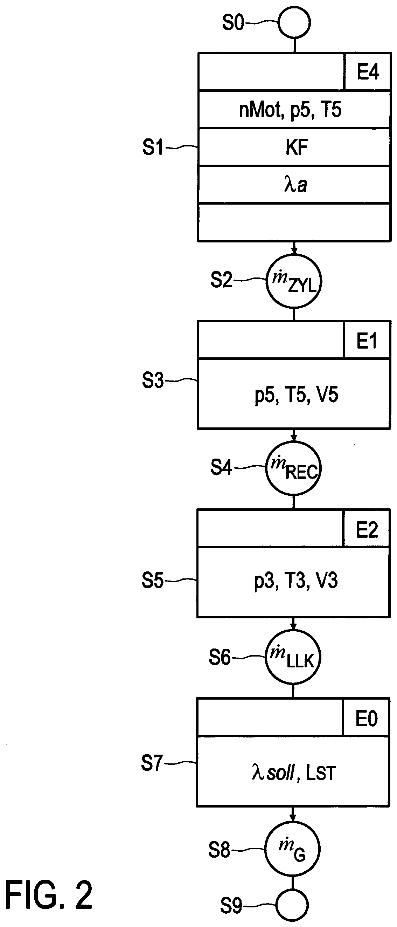

- Fig. 2: ein Ablaufdiagramm einer bevorzugten Ausführungsform eines Verfahrens zur Bestimmung im Rahmen einer simultanen Echtzeit-Bestimmung eines einem einem früheren Gemischzustand zugeordneten Eingabe-Gemischanteil eines Gas-Luft-Gemisches mittels einem einem späteren Gemischzustand zugeordneten Ausgabe-Gemischanteil eines Gas-Luft-Gemisches, wobei der Eingabe-Gemischanteil des Gas-Luft-Gemisches am Gasmischer bestimmt wird und am Gasmischer nach Maßgabe des Eingabe-Gemischanteils ein Luftstrom und/oder ein Gasstrom eingestellt wird,

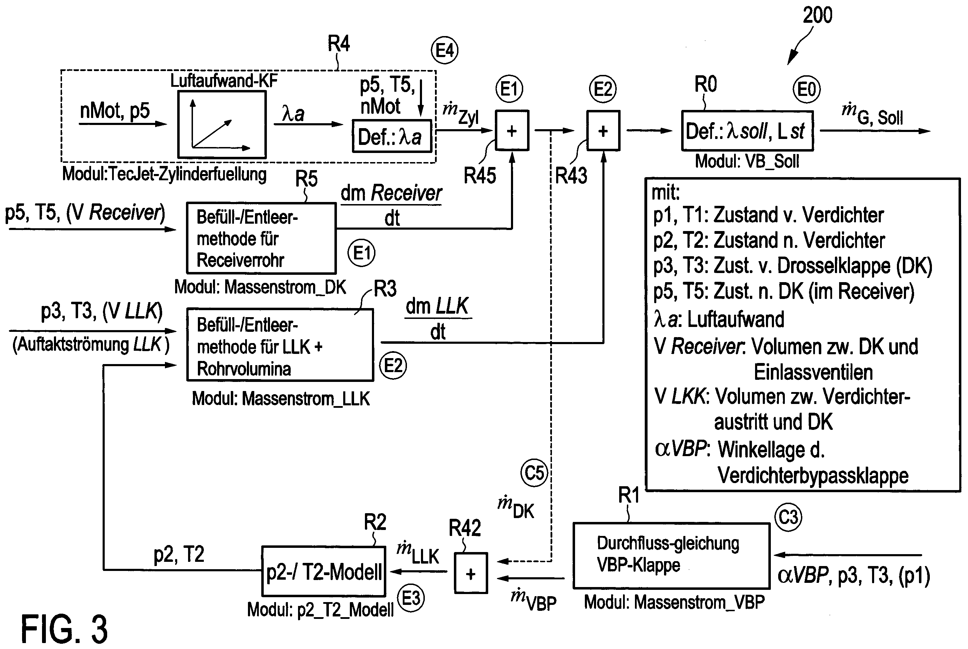

- Fig. 3: eine Schemadarstellung einer bevorzugten Ausführungsform einer Reglersstruktur für den Dual-Fuel-Betrieb, wobei der Eingabe-Gemischanteil eines Gas-Luft-Gemisches des Gasmischers vom Ausgabe-Gemischanteil eines dem Motor zugeführten eines Gas-Luft-Gemisches über eine Anzahl von Zwischenzuständen des Gemischanteils in der Ansaugstrecke mittels dem Ansaugstreckenmodell bestimmt wird.

Fig. 1 zeigt eine Gas-Brennkraftmaschine 100 mit einem Motor 10 sowie einem Ansaugsystem mit einer verzweigten Ansaugstrecke 30. In der Ansaugstrecke ist u. a. ein Gasmischer 40 und zur Bildung einer Aufladung, ein Turbolader 50 und ein Ladewärmetauscher 60, hier in Form eines Ladeluftkühlers, sowie ein Bypass 70 angeordnet.

Der Motor ist vorliegend mit einer Anzahl von sechzehn Zylindern als V-Motor mit acht Zylindern Ai, i=1..8 auf einer A-Seite und acht Zylindern Bi, i=1..8 auf einer B-Seite ausgeführt; diese Art einer Zylinderanordnung und Anzahl ist vorliegend lediglich beispielhaft dargestellt sind. Insbesondere für großmotorige Anwendungen eignen sich auch Auslegungen des Motors mit zehn, zwölf, zwanzig, vierundzwanzig oder achtundzwanzig Zylindern oder einer anderen Anzahl von Zylindern.

Im Falle einer alternativen oder zusätzlichen Auslegung als Dual-Fuel-Brennkraftmaschnine weist die Brennkraftmaschine auch ein gestrichelt gezeigtes Einspritzsystem 20 auf, das vorliegend als Common-Rail-System mit einem Common-Rail 21 gebildet ist, von dem eine Anzahl von Einspritzleitungen 22 --jeweils mit Injektor 23 und einem dem Injektor vorgeordneten Einzelspeicher 24-- zu je einem Zylinder Ai, Bi, i=1..8 des Motor 10 abzweigen. Das Einspritzsystem 20 ist ausgebildet, flüssigen Brennstoff wie Diesel oder auch einen anderen verflüssigten oder flüssigen Brennstoff zu portionieren, um diesen in einem Dieselbetrieb als Flüssigbrennstoff oder in einem Gas- bzw. Zündstrahl-Betrieb als Zündstrahl jeweils zu Beginn eines Arbeitsspiels eines Zylinders Ai, Bi einzuspritzen; dies bei sehr hohen Einspritzdrücken. Demgemäß weist der Motor 10 in dieser Variante weiter ein Common-Rail-Einspritzsystem 20 für einen Flüssigbrennstoff, hier insbesondere Dieselbrennstoff, sowie eine Aufladung 50 mit einem Ladewärmetauscher 60 sowie mit einem Bypass 70 zur Umgehung der Aufladung 50 und des Ladewärmetauschers 60 auf.

Weiter bezugnehmend auf den mit durchgezogenen Strichen gezeigten wesentlichen Teil der Ausführungsform, saugt der am einlassseitigen Ende des Ansaugsystems an die Ansaugstrecke 30 angebundene Gasmischer 40 Ladeluft LL aus der Umgebung an und mischt dieser Brenngas BG zu. Das Ladegemisch, im Gasbetrieb auch als Brenngasgemisch zu bezeichnen, --im folgenden auch kurz "Gemisch G"-- mit Massendurchsatz m(')_G ( "( ')" ist in der Zeichnung der Übersichtlichkeit als Punkt über der Masse m oder anderen Größe dargestellt) wird mit dem Ansaugdruck p1 und bei einer Ansaugtemperatur T1, die im wesentlichen der Umgebungstemperatur entspricht, über eine Verdichterstrecke 32 einem Verdichter 51 des Turboladers 50 zugeführt und dort verdichtet auf einen Verdichtungsdruck p2 bei einer Verdichtungstemperatur T2. Der Verdichter 51 wird von einer Turbine 52 angetrieben und sitzt mit dieser auf einer gemeinsamen Laderachse 53; die Turbine 52 des Abgasstrangs 90 wiederum wird durch das den Motor 10 verlassende Abgas AG im Abgasstrang 90 angetrieben. Der in Folge der Verdichtung auf die Verdichtungstemperatur T2 aufgeheizte Massenfluss m(')_G des Gemisches G wird einer Kühlstrecke 31 der Ansaugstrecke 30 zugeführt und dort in einem Ladewärmetauscher 60 über eine Kühlerstruktur 61 geleitet; in dem hier symbolisch dargestellten Wärmetauschervolumen 62 findet ein Wärmetausch mit einem Kühlmedium in der Kühlerstruktur 61 statt, sodass das Gemisch G gekühlt wird. Das Brenngasgemisch verlässt das Wärmetauschervolumen der Größe V3 in abgekühlter Form bei einer Ladetemperatur T3 und einem Ladedruck p3 in Richtung einer Ladestrecke 33 zur Zuführung des Gemisches G zum Motor 10.

In einem Ansaugstreckenmodell wird der Zustand des Gemisches G vor dem Verdichter 51 vergleichsweise allgemein mittels der Zustandsgrößen für Druck und Temperatur angegeben, hier Ansaugtemperatur T1 und Ansaugdruck p1 vor dem Verdichter 51, bzw. nach dem Verdichter 51 bei erhöhtem Verdichtungsdruck p2 und erhöhter Verdichtungstemperatur T2 mit den Zustandsgrößen p2, T2 nach dem Verdichter 51, mittels einem geeigneten Verdichtermodell beschrieben; dies etwa nach einer Gaszustandsgleichung, wie z. B. für eine ideales oder reales Gas. Den folgenden Komponenten des Wärmetauschers 60 und des Receivers 80, wie etwa einem Krümmer und/oder einer Sammelstrecke zugeordnet, kommt als Großvolumina der Ansaugstrecke 30 nach dem Konzept der Erfindung besondere Bedeutung zu, sodass diesen und dem weiterem Raum der Ansaugstrecke zur Modellierung der weiteren Gaszustände ein Wärmetauschervolumen V3 bzw. ein Receivervolumen V5 im Ansaugstreckenmodell zugeordnet wird. Demnach nimmt das das Brenngas-Gemisch G im Wärmetauschervolumen V3 die Zustandsgrößen p3, T3 an, dies infolge der Abkühlung und einer Volumenvergrößerung bei abnehmendem Ladedruck und Ladetemperatur p3, T3.

Der Zustand des Gemisches G im Bypass 70 bestimmt sich grundsätzlich ebenfalls nach Maßgabe der Zustandsgrößen p1, T1 eingangs bzw. p3, T3 ausgangs des Bypass 70 oder umgekehrt im Falle einer Rückströmung durch den Bypass 70;. d. h. einem Bypass-Gasgemisch G_BP in der Bypass-Strecke 71 des Bypasses 70 stellt sich in Abhängigkeit der herrschenden Druckverhältnisse und der Stellung der Verdichter-Bypass-Drossel 72 --hier gemäß dem Stellwinkel αVBP der Verdichter-Bypass-Klappe --eine Bypass-Strecke 71 kann insbesondere zur Rückführung von überschüssigem Gemisch G vor den Verdichter 51 dienen, um dieses wieder verdichtet nochmals einer zur Verbrennung in den Zylindern Ai, Bi des Motors 10 zuzuführen.

Vor einer Zuführung des Gasgemisches G im Zustand p3, T3 zum Motor 10 wird dieses unter Änderung des Druckes und der Temperatur nach Massgabe eines über die Motor-Drossel 82 in das Receivervolumen 81 geführten Massenstroms m(')_DK --und nach Maßgabe des Receivervolumens V5 bei einem Receiverdruck p5 und einer Receivertemperatur T5-- in den Receiver 80 geführt. Vorliegend ist jeweils ein erstes und ein zweites Receivervolumen 81.B, 81.A einer B-Seite bzw. einer A-Seite des Motors 10 zugeordnet, d. h. diese sind strömungsaufwärtig vor den Zylindern Ai, Bi und nach der ersten und zweiten Ladestrecke 33.B, 33.A der B-Seite und A-Seite und nach dem Wärmetauschervolumen 62 angeordnet. Die Motor-Drossel 82 wird vorliegend über eine erste und eine zweite Motor-Drosselklappe 82.B, 82.A gebildet, die jeweils dem ersten und zweiten Receivervolumen 81.B, 81.A zugeordnet ist, wobei die erste und die zweite Motor-Drosselklappe 82.B, 82.A unabhängig voneinander einstellbar sind; im folgenden wird auf diese, wo einfacher, zusammen unter der Motor-Drossel 82 Bezug genommen. Das Receivervolumen 81 ist als Summe des ersten und zweiten Receivervolumens 81.A und 81.B zu verstehen. In dem Receivervolumen 81 nimmt das Gemisch G infolge der Volumenvergrößerung und abhängig von der Stellung αDK der Motor-Drosselklappen 82.A, 82.B im Volumen V5 des Receivervolumens 81 die durch p5 und T5 gekennzeichneten Gaszustände ein; dies in Abhängigkeit des B-seitigen bzw. A-seitigen Massendurchsatzes m(')_DK, B bzw. m(')_DK, A je nach Stellung der Motor-Drosselklappen 82.B und 82.A.

Die durch pi, Ti, i=1,2 bzw. Vj, pj, Tj, j=3,5 gekennzeichneten Zustände des Gasgemisches G bestimmen sich bei dieser Ausführungsfomr im Wesentlichen in den Bereichen wie sie durch den Verdichter 51, das Wärmetauschervolumen 62 und das Receivervolumen 81 gegeben sind, bzw. gegen die Grenzen, die durch die Motor-Drossel 82 und die Verdichter-Bypass-Drossel 72 bzw. den Verdichter 51 gegeben sind.

Im Folgenden ergibt sich für den Receiverdruck p5 im Receivervolumen V5 bzw. für die Regelgrößen aufbauend auf dem Recierverdruck p5 --wie beispielsweise ein IST-Receiverdruck p5_IST oder ein SOLL-Receiverdruck p5_SOLL oder ein simulierter Receiverdruck p5-aufgrund des hier dargestellten Ansaugstreckenmodells einer Gas-Brennkraftmaschine 100 eine Rolle zur Bestimmung eines Eingabe-Gemischanteil eines Gas-Luft-Gemisches am Gasmischer 40 über eine Anzahl von Zwischenzuständen des Gemischanteils in einer Anzahl von zugeordneten Volumen der Ansaugstrecke 30.

Es zeigt sich, dass die Einstellung der Massenströme m(')_G für Brenngas BG und m(')_LL für Ladeluft LL am Gasmischer 40 entsprechend einem Verbrennungslufterhältnis LAMBDA_SOLL bzw. einem stöchiometrischem Luftverhältnis Lst nicht notwendigerweise unter Voraussetzung von stationären Bedingungen entlang der der Ansaugstrecke erfolgen kann. Das Konzept der Ausführungsform berücksichtigt in einem Ansaugstreckenmodell --wie anhand von Fig. 1 beschrieben-- deshalb wenigstens zwei Großvolumina zur Zusammenfassung des Volumens der Ansaugstrecke, nämlich das Receivervolumen 80 und das Ladewärmetauschervolumen 62. Die Ansaugstrecke 30 wird im Rahmen des Ansaugstreckenmodells auf Basis des --grundsätzlich bekannten-- Prinzips einer Befüll- und Entleermethode modelliert. Die Zustandsänderungen in den Volumina werden vorliegend als quasi isotherm betrachtet. Dies vereinfacht das System durch Beschränkung auf Massenerhaltung gegenüber adiabater Betrachtungsweise und vereinfacht insbesondere eine simultane Rechnung der Brennkraftmaschine bzw. der Ansaugstrecke derselben in Echtzeit. Grundsätzlich kann jedoch auch eine adiabatische oder polytrope Betrachtungsweise oder ein gezielter Wärmeübergang bei genügender Rechenkapazität herangezogen werden, um die Zustandsänderungen in der Ansaugstrecke zu simulieren.

Aus Fig. 3 wird darüberhinaus ersichtlich, dass ausserdem spezielle Annahmen für Einrichtungen der Ansaugstrecke im Rahmen von Zusatzmodellen umgesetzt werden können, insbesondere dann, wenn Messwerte zur entsprechenden Einrichtung der Ansaugstrecke 30 nicht zur Verfügung stehen. Dies betrifft zum Beispiel das Zusatzmodell eines Verdichters (p2_T2-Modul, das die Tätigkeit des Verdichters 51 und die Zustände des Gemisches G vor dem Verdichter über Temperatur und Druck (G(p1, T1)) und nach dem Verdichter (G(p2, T2)) beschreibt. Dies betrifft zum Beispiel auch das Zusatzmodell für eine Verdichterbypass-Klappe (Massnstrom_VBP), das einen Massenstrom durch die Verdichterbypass-Klappe im Rahmen einer Durchflussgleichung beschreibt.

Im Betrieb wird dem Motor 10 ein Brennstoff-Gemisch umfassend ein Ladegemisch zugeführt. Dabei wird der Motor mit Gas als Brennstoff in dem Ladegemisch betrieben. Mittels einem einem späteren Gemischzustand (mit Zustandsgrößen p5, T5) zugeordneten Ausgabe-Gemischanteil (Massenstrom m(')_G,ZYL) des Gas-Luft-Gemisches wird nach einem Ansaugstreckenmodell --wie es in Fig. 3 mit der Struktur des Reglers 200 beschrieben ist-- ein wenigstens einem früheren Gemischzustand (mit Zustandsgrößen p0, T0) zugeordneter Eingabe-Gemischanteil (Massenstrom m(')_G,SOLL) eines Gas-Luft-Gemisches bestimmt. Die Bestimmung erfolgt mittels dem Ansaugstreckenmodell als Basis eines Rechenmodells für die Ansaugstrecke 30, den Gasmischer 40 und den Receiver 80, bzw. den Eingang zum Motor 10.

Gemäß dem Konzept dieser Ausführungsform ist vorgesehen, dass der Ausgabe-Gemischanteil (Massenstrom m(')_G,ZYL) des Gas-Luft-Gemisches an einer Motorzuführung --vorliegend an einem Receiver 80-- bestimmt wird. Der Eingabe-Gemischanteil (Massenstrom m(')_G,SOLL) wird aus dem Ausgabe-Gemischanteil (Massenstrom m(')_G,ZYL) über eine Anzahl von Zwischenzuständen (mit Zustandsgrößen pi, Ti, i=5,3,2,1) des Gemischanteils --vorliegend im Rahmen einer simultanen Echtzeit-Rechnung-- bestimmt. Die Anzahl von Zwischenzuständen (mit Zustandsgrößen pi, Ti, i=5,3,2,1) sind einer Anzahl von Volumina (Vi, i=5,3,2,1) bzw. den Komponenten E1, E2, E3, E4 sowie C3 und C5 in der Ansaugstrecke zugeordnet. Der Eingabe-Gemischanteil eines Gas-Luft-Gemisches wird am Gasmischer 40 bestimmt und nach Maßgabe des Eingabe-Gemischanteils wird ein Luftstrom und/oder einen Gas-Strom BG am Gasmischer 40 eingestellt.

Vorliegend sind in dem Ansaugstreckenmodell eine Anzahl von Grossvolumina der Ansaugstrecke zugeordnet; diese umfassen: zwei Receivervolumina 81.B, 81.A (mit zugeordnetem Volumen V5 und mit Zustandsgrößen p5, T5 eines Ladegemisches darin), wenigstens ein Zylindervolumen im Motorblock, wenigstens ein Ladewärmetauscher-Volumen 62 (mit zugeordnetem Volumen V3 und mit Zustandsgrößen p3,T3 eines Ladegemisches darin), wenigstens ein Verdichter-Volumen am Verdichter 51 (mit Wert V2 und mit Zustandsgrößen p2,T2 eines Ladegemisches am Ausgang desselben) bzw. die Zustände vor dem Verdichter 51 (mit Zustandsgrößen p1, T1 eines Ladegemisches) und mit Zustandsgrößen p0, T0 der Umgebung (Atmosphäre) einer Ansaugluft, wie dies in Fig. 1 angezeigt ist.

Die ebenfalls in Fig. 1 gezeigten Komponenten E1, E2, E3, E4 sowie C3 und C5 des Ansaugsystems sind in dem vorliegenden Ansaugstreckenmodell berücksichtigt und die Zustände bzw. Massenströme des Ladegemisches werden diesbezüglich simuliert bzw. berechnet. Dies ist vorliegend lediglich als bevorzugtes Beispiel aus einer Reihe von anderen möglichen Beispielen ausgewählt worden; beipsielsweise kann ein abgewandeltes Ansaugstreckenmodell auch noch weitere Komponenten berücksichtigen im Falle einer zweistufigen Aufladung. Auch können grundsätzlich weitere Volumina in einem Ansaugstreckenmodell berücksichtigt werden. Im Grenzfall kann die Ansaugstrecke in endlich kleine oder infinitesimale Teilvolumina zerlegt werden und eine Bestimmung für die Zustände und Massenströme des Ladegemisches ergibt sich dann als Lösung u. a. eines Differenzen- bzw. Differential-Gleichungssystems; diese Abwägung der Modellverfeinerung kann getroffen werden unter Berücksichtigung des Rechenaufwands und der Komplexität der zu simulierenden Ansaugstrecke; insbesondere unter Berücksichtigung einer Echtzeit-Fähigkeit.

Fig. 2 zeigt dazu als Flussschema prinzipiell den Ablauf einer bevorzugten Ausführungsform eines Betriebsverfahrens für eine Gas-Brennkraftmaschine 100 mit einem Gasmischer 40, einer Ansaugstrecke 30 und einem vorliegend auch als Gasmotor bezeichneten Motor 10 mit einer Anzahl von Zylindern Ai, Bi, i=1..8, wie dies anhand von Fig. 1 beschrieben wurde. Grundsätzlich lässt sich das Betriebsverfahren unter Implementierung eines in Fig. 2 dargestellten Bestimmungsverfahrens für Stellgrößen an einem Gasmischer 40 umsetzen, mittels denen ein Luftstrom LL und/oder ein Gasstrom BG einstellbar ist. Bezugnehmend auf Fig. 2 sieht das Verfahren vorliegend unter Zugrundelegung des hier gezeigten Ansaugstreckenmodells im Schritt S0 weitere Schritte S1 bis S9 vor, die sich an den zuvor beschriebenen durch das Ansaugstreckenmodell festgelegten Komponenten E1, E2, E3, E4 sowie C3 und C5 des Ansaugsystems orientieren, die in Fig. 1 entsprechend angezeigt sind.

Konkret erfolgt die erfindungsgemäße Bestimmung eines Eingabegemischanteils der Komponente E0 --hier dem Gasmischer 40 zugeordnet-- "rückwärts", d. h. durch Rückrechnen aus der Kenntnis des Ausgabegemischanteils an der Komponente E4 der Ansaugstrecke. Vorliegend entspricht die Komponente E4 im Wesentlichen dem Motor 10 bzw. einem Zylinder Ai, Bi, i=1..8 des Motors 10. In einem ersten Schritt S1 des Bestimmungsverfahrens wird mit entsprechenden Kennzahlen für Motordrehzahl nMOTund Receiverdruck p5 sowie Receivertemperatur T5 über ein Rechenmodul in der Regeleinheit R4 eine Zylinderfüllung bestimmt, beispielsweise ein Maß für den erforderlichen Luftaufwand LAMBDA_a am Motor 10 angegeben. In einem zweiten Schritt S2 des Bestimmungsverfahrens lässt sich dann an der Komponente E4 des Ansaugsystems --hier ein Zylindereingang beispielsweise zu einem Zylinder Ai, Bi, i=1..8-- ein Gemischmassenstrom m(')_ZYL vorgeben.

Entsprechend ist in Fig.3 eine Reglerstruktur eines Reglers 200 gezeigt, welcher --zur Ausführung der Schritte S1 und S2-- eine erste Regeleinheit R4 aufweist. Die Eingangsgrößen sind eine Motordrehzahl nMOT, sowie ein Zylindereingangsdruck --insbesondere hier ein Receiverdruck p5 in einem Receiver 80, bzw. Receivervolumen 81.B, 81.A mit einem Gesamtvoumen V5-- und ggfs. weitere zugeordnete Gaszustandsgrößen eines Gemischanteils im Receiver 80 (mit Receivervolumen V5).

In einem dritten Schritt S3 der Fig. 2 werden dann als weitere Komponente E1 des Ansaugsystems die Receivervolumina 81.A, 81.B mit einem Gesamtvolumen V5 des Receivers 80 --beispielsweise zugeordnet einem Krümmerm oder einer Mischstrecke, die zwischen Zylindereingängen und der Motordrosselklappe DK in der Ansaugstrecke eingebunden istberücksichtigt.

Bei vorgenannter Kenntnis der Druck- und Temperaturverhältnisse im Receivervolumen 81.A, 81.B V5 (Receiverdruck p5, Receivertemperatur T5) lässt sich in einem vierten Schritt S4 ein Gemischmassenstrom durch den Receiver m(') _RECEIVER mittels einer in Fig. 3 gezeigten Regeleinheit R5 bestimmen. Die Regeleinheit R5 verfügt über eine Recheneinheit, welche aus dem Gemischzustand eines Gas-/Luftgemisches im Receiver 80 (auch oft als Receiverrohr bezeichnet) --d. h. in den Receivervolumina 81.A, 81.B mit Volumen V5 die Zustandsparameter p5, T5 des Ladegemisches-- mit einer Zustandsgleichung des Ladegemisches und einer Massenstromgleichung nach der Befüll- und Entleermethode für das Receiverrohr 81.A, 81.B den Gemischmassenstrom m(')_RECEIVER bestimmt.

Des Weiteren sieht die bevorzugte Ausführungsform des Bestimmungsverfahren in Fig. 2 für die weitere Komponente E2 auf Basis des Ansaugstreckenmodells den Ladewärmetauscher 60 vor. In dem zugeordneten Volumen V3 des Wärmetauschervolumens 62 nimmt das Ladegemisch einen Gaszustand ein, der über den Ladedruck p3 und die Ladetemperatur T3 für das Volumen V3 in einem fünften Schritt S5 berechnet werden kann. Analog wird gemäß dem hier dargestellten Bestimmungsverfahren ein Gemischmassenstrom m(')_LLK durch den Aufladewärmetauscher 62 bestimmt. Entsprechend zeigt Fig. 3 dazu eine Regeleinheit R3 zur Bestimmung des Massenstroms m(')_LLK durch den Ladewärmetauscher 60 in Form des Ladeluftkühlers mit der Kühlerstruktur 61. Die Bestimmung erfolgt in einem sechsten Schritt S6 mittels der Befüll- und Entleermethode für das Volumen V3 in Kenntnis des Gemischzustands bzw. der thermodynamischen Kenngrößen desselben und einer entsprechenden Gemischmassendurchflussgleichung.

Mittels der Gemischmassenströme m(')_ZYL, m(') _RECEIVER und m(')_LLK lässt sich in einem siebten Schritt S7 dann auf einen Sollwert eines Verbrennungsluftverhältnisses LAMBDA-Soll und auf einen stöchiometrischen Luftbedarf (Lst) schließen, d. h. auf die wesentlichen SOLL-Kenngrößen des Brennstoffs an der weiteren Komponente E0 des Gasmischers 40 in der Ansaugstrecke 30. Dazu ist in der in Fig. 3 dargestellten Reglertruktur ein erstes Additionsglied R45 und ein zweites Additionsglied R43 vorgesehen, um aus einer Gemischmassendurchflussgleichung den Gemischmassenstrom m(')_G,SOLL zu bestimmen; dies unter Berücksichtigung einer weiteren Reglereinheit R0 zur Umsetzung des siebten Schrittes S7, nämlich zur Berechnung des Verbrennungsluftverhältnisses LAMBDA_SOLL und des stöchiometrischen Luftbedarfs Lst.

Damit lässt sich dann im achten Schritt S8 eine geeignete Stellgröße am Gasmischer 40 vorgeben, um nach Maßgabe einer aktuellen Motordrehzahl nMOT und den Druck- und Temperaturverhältnissen (im wesentlichen p5, T5) am Zylindereingang den Eingabegemischanteil am Gasmischer 40 einzustellen.

Das Ansaugstreckenmodell ist vorliegend mit zwei Großvolumina --nämlich dem Receivervolumen 81.B, 81.A (V5) und dem Ladewärmetauschervolumen 62 (V3)-- ausgelegt und unter Berücksichtigung der Befüll-/Entleermethode für beide Volumina in Kombination mit entsprechenden Durchflussgleichungen für wenigstens die Drosseln 82, 72 sowie einem Verdichtermmodell am Verichter 51 (mit Zustandsgrößen p1, T1 → p2, T2) in eine Simulation bzw. Berechnung der Ansaugstrecke 30 eingebracht. Dies ist vorliegend ausreichend, um die eingangs genannte Problematik zu beseitigen; die Großvolumina, die in bisher bekannte Rechenmethoden nicht ausreichend berücksichtigt sind und deswegen eine Entkopplung von Gasmassenstrom am Gasmischer und dem tatsächlich vorhandenen Gasmassenstrom am Motor verursachen sind in dem Ansaugstreckenmodell des in Fig. 2 dargestellten Bestimmungsverfahrens ausreichend berücksichtigt. Gleichzeitig zeigt sich, dass das Bestimmungsverfahren in der hier dargestellten Form vergleichsweise einfach und damit rechenzeiteffektiv ausführbar ist, um im Rahmen einer simultanen Echtzeitbestimmung zur Verfügung zu stehen. So kann praktisch in Echtzeit der Gasmischer 40 auf den akuten Bedarf des Motors 10 eingestellt werden.

In Weiterbildung des in Fig. 2 gezeigten Bestimmungsverfahrens zeigt Fig. 3 im Detail die Regeleinheit R3 als auch eine Rückkoppelung der Massenströme m(')_DK, m(')_RECEIVER und m(')_LLK. Dies mach Sinn für den Fall, dass ein Bypass 70 vorgesehen ist. Gemäß Fig. 3 werden als weitere Eingangsgröße zur Regeleinheit R3 die Zustandsgrößen des Ladegemisches G für einen Gemischzustand nach dem Verdichter 51 berücksichtigt, nämlich als Verdichtungsdruck p2 und Verdichtungstemperatur T2 zusätzlich zum Gemischzustand im oder nach dem Ladewärmetauscher 60, als Ladedruck p3 und Ladetemperatur T3. Der Gemischzustand nach dem Verdichter 51 (Zustandsparameter p2, T2) ergibt sich im Rahmen einer weiteren Regeleinheit R2 zur Beschreibung des Verdichters 51 in einem Verdichtermodell.

Der Verdichter 51 ist im Ansaugstreckenmodell als weitere Ansaugstreckeneinrichtung E3 mit einer dieser zugeordneten Regeleinheit R2 berücksichtigt. Als Eingang der Regeleinheit dient ein Gemischmasssenstrom m(')_LLK des Ladeluftkühlers 60. Dieser ist wiederum abhängig von einem Gemischmassenstrom m(')_VBP an der Verdichterbypassklappe 72 als auch dem Gemischmassenstrom an einer Motordrosselklappe 82.A, 82.B. Diese Gemischmassenströme werden vorliegend in der Additionseinheit R42 aufaddiert, um den am Eingang des Wärmetauschers 60 zugeführten Gemischmassenstrom m(')_LLK vorzugeben. Der Gemischmassenstrom m(')_DK an der Motordrosselklappe 82.B, 82.A wiederum ergibt sich als Ausgang des Additionsgliedes R45, d. h. zurückgerechnet aus dem Gemischmassenstrom m(')_ZYL am Zylindereingang und Receivervolumen.

Der weitere Eingang eines von der Drosselklappe DK zurückgeführten Gemischmassenstroms m(')_DK in Rückkopplung zur Regeleinheit R2, --d. h. der Einfluss der Ansaugstreckeneinrichtung C5 zur Einstellung des Rückstroms eines Ladegemsiches durch den Verdichterbypass 70-- ergibt sich durch die in Fig. 3 gestrichelt dargestellte Rückkoppelung des Ausgangs der Additionseinheit R45 auf den Eingang der Additionseinheit R42.

Der Gemischmassenstrom durch den Verdichter-Bypass 70 wiederum ergibt sich im Rahmen einer Durchflussgleichung an der weiteren Ansaugstreckeneinrichtung C3, nämlich hier der Verdichterbypassklappe 72. Während sich der Gemischmassenstrom m(')_DK an der Motordrosselklappe DK im Wesentlichen aus der Stellung αDK der Drosselklappe als Ansaugstreckeneinrichtung C5 ergibt, so ergibt sich der Gemischmassenstrom des Verdichterbypasses m(')_VBP im Wesentlichen aus der Stellung αVBP der Verdichterbypassdrossel 72 sowie unter Berücksichtigung der Druckverhältnisse am Anfang und am Ende des Verdichter-Bypasses 70, nämlich unter Berücksichtigung von p1,T1 (d. h. dem Ladegemischzustand vor dem Verdichter 51) und p3, T3 (d. h. dem Ladegemischzustand vor der Drosselklappe DK).

So erhält die weitere Regeleinheit R1 als Eingangsgrößen nicht nur die Stellung αVBP der Verdichterbypassdrossel 72 sondern auch die Gaszustandsgrößen p3, T3 im Ladewärmetauscher 60 und wenigstens den Ansaugdruck p1, T1 vor dem Verdichter, wobei die Temperatur T1 im Wesentlichen der Umgebungstemperatur T0 entsprechen kann.

Im Ergebnis kann unter Verwendung der in Fig. 3 näher gezeigten Reglerstruktur 200 ein verbessertes Verfahren zum Betrieb der Gas-Brennkraftmaschine 100 umgesetzt werden.

## Patentansprüche

1. Verfahren zum Betrieb einer Gas-Brennkraftmaschine (100), mit
- einem Gasmischer (40), einer Ansaugstrecke (30), einem Ladewärmetauscher (60), und
- einem Motor (10) mit einer Anzahl von Zylindern (Ai, Bi), und einem Receiver (80) mit einem Receivervolumen (81) vor einem Zylinder (Ai, Bi) des Motors (10), wobei in dem Verfahren
- dem Motor (10) ein Brennstoff-Gemisch umfassend ein Ladegemisch zugeführt wird und der Motor (10) im Gasbetrieb mit Gas als Brennstoff in dem Ladegemisch betrieben wird,
wobei
- mittels einem wenigstens einem früheren Gemischzustand (p0, T0) zugeordneten Eingabe-Gemischanteil (m(')_G, SOLL) eines Gas-Luft-Gemisches (G), ein einem späteren Gemischzustand (p5, T5) zugeordneter Ausgabe-Gemischanteil (m(')_G, ZYL) des Gas-Luft-Gemisches (G) bestimmt wird, mit einer Bestimmung, die mittels einem als Basis eines Rechenmodells für die Ansaugstrecke (30) dienenden Ansaugstreckenmodell erfolgt,
wobei mit der Bestimmung
- (S1, S2, R4) der Ausgabe-Gemischanteil (m(')_G, ZYL) des Gas-Luft-Gemisches (G) an einer Motorzuführung bestimmt wird, und (S7, R0) der Eingabe-Gemischanteil (m(')_G, SOLL) des Gas-Luft-Gemisches (G) am Gasmischer (40) bestimmt wird und (S8) nach Maßgabe des Eingabe-Gemischanteils (m(')_G, SOLL) ein Luftstrom und/oder ein Gasstrom am Gasmischer (40) eingestellt wird,
- nämlich der Eingabe-Gemischanteil des Gas-Luft-Gemisches an einem Ausgang des Gasmischers (40) bestimmt wird und der Ausgabe-Gemischanteil des Gas-Luft-Gemisches an einem Zylinder (Ai, Bi) oder einem Zylindereingang des Motors (10) bestimmt wird, wobei
- der Eingabe-Gemischanteil vom Ausgabe-Gemischanteil, über eine Anzahl von Zwischenzuständen des Gemischanteils in einer Anzahl von zugeordneten Volumen der Ansaugstrecke (30) bestimmt wird, wobei
- die Bestimmung des Eingabe-Gemischanteils durch Rückrechnen vom Ausgabe-Gemischanteil erfolgt, und
mit der Bestimmung
- der Gemischanteil im zugeordneten Volumen der Ansaugstrecke (30) für eine Anzahl realer Gehäusevolumen der Ansaugstrecke (30) bestimmt wird, wobei die Anzahl von Zwischenzuständen des Gemischanteils in der Ansaugstrecke (30) wenigstens einem Grossvolumen der Ansaugstrecke (30) zugeordnet ist, und
eine Anzahl der Großvolumina der Ansaugstrecke (30) ein oder mehrere Komponenten-Volumina der Ansaugstrecke (30) umfasst, die wenigstens ein Receivervolumen (V5, p5, T5, 81, 80) und ein Ladewärmetauscher-Volumen (V3, p3,T3, 62, 60) umfasst, und
- ein Zustandsdruck bestimmt wird aufgrund des Rechenmodells der Ansaugstrecke (30) umfassend (R45, R43) wenigstens ein Rechenvolumen des Receivervolumens (V5, p5, T5, 81, 80) und des Ladewärmetauscher-Volumens (V3, p3,T3, 62, 60), wobei der Zustandsdruck als Receiverdruck (p5) in dem Receivervolumen (81) vor einem Zylinder (Ai, Bi) des Motors (10) definiert ist, das dem Zylinder (Ai, Bi) in strömungsaufwärtiger Richtung vorgeordnet und einer Aufladung und/oder einer Bypass-Strecke in strömungsabwärtiger Richtung nachgeordnet ist.

2. Verfahren nach Anspruch 1, **dadurch gekennzeichnet, dass** der Eingabe-Gemischanteil vom Ausgabe-Gemischanteil über die Anzahl von Zwischenzuständen des Gemischanteils in der Anzahl von zugeordneten Volumina der Ansaugstrecke (30) im Rahmen einer zum Betrieb des Motors simultanen Echtzeit-Bestimmung bestimmt wird.

3. Verfahren nach Anspruch 1 oder 2, **dadurch gekennzeichnet, dass**
- der Ausgabe-Gemischanteil des Gas-Luft-Gemisches an dem Receiver (80) bestimmt wird.

4. Verfahren nach einem der vorhergehenden Ansprüche **dadurch gekennzeichnet, dass** die Bestimmung eines Gemischanteils umfasst:
- die Bestimmung eines Gemischmassenstromes mittels einer Durchflussgleichung für das Volumen der Ansaugstrecke (30), wobei dem Eingabe-Gemischanteil am Gasmischer (40) ein Gemischmassenstrom und/oder dem Ausgabe-Gemischanteil ein Gemischmassenstrom an der Motorzuführung zugeordnet ist; und/oder
- die Bestimmung eines Gemischzustands wenigstens die Bestimmung einer Temperatur und/oder eines Zustandsdruckes des Gemischanteils für das zugeordnete Volumen der Ansaugstrecke (30) mittels einer thermodynamischen Zustandsgleichung realer oder idealer Gase in dem zugeordneten Volumen umfasst.

5. Verfahren nach einem der vorhergehenden Ansprüche, **dadurch gekennzeichnet, dass** dem Eingabe-Gemischanteil ein Verbrennungsluftverhältnis zugeordnet wird, nämlich einem SOLL-Wert des Verbrennungsluftverhältnisses (Lambda_SOLL), wobei eine Gaszumesseinheit des Gasmischers (40) mittels eines stöchiometrischen Luftbedarfs (L_st) und/oder des Verbrennungsluftverhältnisses geführt wird.

6. Verfahren nach einem der vorhergehenden Ansprüche, **dadurch gekennzeichnet, dass** die Bestimmung des Gemischanteils, nämlich eines Gemischmassenstromes und/oder eines Gemischzustands eines Zwischenzustandes, im zugeordneten Volumen der Ansaugstrecke (30) für eine Anzahl von theoretischenRechenvolumen der Ansaugstrecke (30) erfolgt, wobei die Anzahl von Zwischenzuständen des Gemischanteils in der Ansaugstrecke (30) wenigstens einem Grossvolumen der Ansaugstrecke (30) zugeordnet ist.

7. Verfahren nach einem der vorhergehenden Ansprüche, **dadurch gekennzeichnet, dass** die Anzahl von Großvolumina der Ansaugstrecke (30) ein Komponenten-Volumen der Ansaugstrecke (30) umfasst, das
- wenigstens ein Verdichter-Volumen (V2, p2, T2) umfasst.

8. Verfahren nach einem der vorhergehenden Ansprüche, **dadurch gekennzeichnet, dass** der Zustandsdruck virtuell bestimmt wird, aufgrund des Rechenmodells der Ansaugstrecke (30) umfassend wenigstens das Rechenvolumen des Receivervolumens (V5, p5, T5, 81, 80) und des Ladewärmetauscher-Volumens (V3, p3, T3, 62, 60).

9. Verfahren nach einem der vorhergehenden Ansprüche, **dadurch gekennzeichnet, dass** der Zustandsdruck virtuell bestimmt wird, nämlich simuliert und/oder gerechnet wird.

10. Verfahren nach einem der vorhergehenden Ansprüche, **dadurch gekennzeichnet, dass** die Anzahl von wenigstens einem Großvolumina der Ansaugstrecke (30) ein oder mehrere Komponenten-Volumina der Ansaugstrecke (30) umfasst, die ausgewählt sind aus der Gruppe weiter umfassend:
- wenigstens ein Verdichterbypass-Volumen (V1, p1 T1 zu V3, p3, T3) an einem Bypassrohrabschnitt und/oder einer Verdichterbypass-Klappe (72);
- wenigstens ein Ansaugstrecken-Volumen an einem Ansaugrohrabschnitt und/oder einer Motor- und/oder Eingangsdrosselklappe (82).

11. Verfahren nach einem der vorhergehenden Ansprüche, **dadurch gekennzeichnet, dass** ein Gemischmassensstrom an einer Drossel (72, 82) bestimmt wird, wobei ein Durchfluss einer Rückströmung (p3, T3, p1, T1) und/oder einer Aufladeströmung bestimmt wird, mittels einer Durchflussgleichung kompressibler Medien an einer idealen oder realen Düse unter Annahme einer reibungsfreien oder reibungsbehafteten Strömung idealer oder realer Gase.

12. Verfahren nach einem der vorhergehenden Ansprüche, **dadurch gekennzeichnet, dass** der Gasbetrieb ein funkengezündeter Gasbetrieb ist.

13. Regelungsvorrichtung mit einem Regler (200) für eine Gas-Brennkraftmaschine (100) mit
- einem Gasmischer (40), einer Ansaugstrecke (30) und
- einem Motor (10) mit einer Anzahl von Zylindern (Ai, Bi) und einem strömungsaufwärts vor den Zylindern angeordneten Receiver (80) mit einem vor den Zylindern (Ai, Bi) des Motors (10) angeordneten Receivervolumen (81),
- einer Aufladung der Ansaugstrecke (30) mit einem Ladewärmetauscher (60), und
- mit einer Bypassstrecke der Ansaugstrecke (30) zur Umgehung der Aufladung, wobei der Motor (10) mit einem zugeführten Brennstoff-Gemisch umfassend ein Ladegemisch mit Gas als Brennstoff im Gasbetrieb betreibbar ist, und die Regelungsvorrichtung mit dem Regler (200) ausgebildet ist:
- mittels einem wenigstens einem früheren Gemischzustand (p0, T0) zugeordneten Eingabe-Gemischanteil (m(')_G, SOLL) eines Gas-Luft-Gemisches (G) einen einem späteren Gemischzustand (p5, T5) zugeordneter Ausgabe-Gemischanteil (m(')_G, ZYL) des Gas-Luft-Gemisches (G) zu bestimmen mit einer Bestimmung, die mittels einem als Basis eines Rechenmodells für die Ansaugstrecke (30) dienenden Ansaugstreckenmodell erfolgt,
wobei die Regelungsvorrichtung mit dem Regler (200) mit einer Bestimmung ausgebildet ist:
- (S1, S2, R4) den Ausgabe-Gemischanteil (m(')_G, ZYL) des Gas-Luft-Gemisches (G) an einer Motorzuführung zu bestimmen und den Eingabe-Gemischanteil (m(')_G, SOLL) des Gas-Luft-Gemisches (G) am Gasmischer (40) zu bestimmen, und am Gasmischer (40) nach Maßgabe des Eingabe-Gemischanteils einen Luftstrom und/oder einen Gasstrom einzustellen,
- nämlich den Eingabe-Gemischanteil des Gas-Luft-Gemisches an einem Ausgang des Gasmischers (40) zu bestimmen und den Ausgabe-Gemischanteil des Gas-Luft-Gemisches an einem Zylinder (Ai, Bi) oder einem Zylindereingang des Motors (10) zu bestimmen, wobei der Eingabe-Gemischanteil vom Ausgabe-Gemischanteil über eine Anzahl von Zwischenzuständen des Gemischanteils, in einer Anzahl von zugeordneten Volumen der Ansaugstrecke (30) bestimmt wird, wobei
- die Bestimmung des Eingabe-Gemischanteils durch Rückrechnen vom Ausgabe-Gemischanteil erfolgt, und
mit der Bestimmung
- der Gemischanteil im zugeordneten Volumen der Ansaugstrecke (30) für eine Anzahl realer Gehäusevolumen der Ansaugstrecke (30) bestimmt wird, wobei die Anzahl von Zwischenzuständen des Gemischanteils in der Ansaugstrecke (30) wenigstens einem Grossvolumen der Ansaugstrecke (30) zugeordnet ist, und
eine Anzahl der Großvolumina der Ansaugstrecke (30) ein oder mehrere Komponenten-Volumina der Ansaugstrecke (30) umfasst, die wenigstens das Receivervolumen (V5, p5, T5, 81, 80) und ein Ladewärmetauscher-Volumen (V3, p3,T3, 62, 60) umfasst, und
ein Zustandsdruck bestimmt wird aufgrund des Rechenmodells der Ansaugstrecke (30) umfassend (R45, R43) wenigstens ein Rechenvolumen des Receivervolumens (V5, p5, T5, 81, 80) und des Ladewärmetauscher-Volumens (V3, p3,T3, 62, 60), wobei der Zustandsdruck als Receiverdruck (p5) in dem Receivervolumen (81) vor einem Zylinder (Ai, Bi) des Motors (10) definiert ist, das dem Zylinder (Ai, Bi) in strömungsaufwärtiger Richtung vorgeordnet und einer Aufladung und/oder einer Bypass-Strecke in strömungsabwärtiger Richtung nachgeordnet ist.

14. Brennkraftmaschine ausgebildet als eine Gas-Brennkraftmaschine (100), mit
- einem Gasmischer (40), einer Ansaugstrecke (30) und
- einem Motor (10) mit einer Anzahl von Zylindern (Ai, Bi) und einem strömungsaufwärts vor den Zylindern angeordneten Receiver (80) mit einem vor den Zylindern (Ai, Bi) des Motors (10) angeordneten Receivervolumen (81),
- einer Aufladung der Ansaugstrecke (30) mit einem Ladewärmetauscher (60), und
- mit einer Bypassstrecke der Ansaugstrecke (30) zur Umgehung der Aufladung, und
- mit einer Regelungsvorrichtung nach Anspruch 13 mit dem Regler (200),
wobei der Motor (10) mit einem zugeführten Brennstoff-Gemisch umfassend ein Ladegemisch mit Gas als Brennstoff im Gasbetrieb betreibbar ist.

15. Brennkraftmaschine ausgebildet als eine Gas-Brennkraftmaschine (100), nach Anspruch 14, **dadurch gekennzeichnet, dass**
- die Gas-Brennkraftmaschine (100) als eine funkengezündete Gas-Brennkraftmaschine ausgebildet ist, und/oder
- die Aufladung der Ansaugstrecke (30) mit dem Ladewärmetauscher (60) als eine ein- oder zweistufigen Aufladung ausgebildet ist und optional mit einer Abgasrückführung ausgebildet ist.

## Claims

1. Method for operating a gas-fired internal combustion engine (100), with
- a gas mixer (40), an intake path (30), an intercooler (60), and
- an engine (10) with a number of cylinders (Ai, Bi), and a receiver (80) with a receiver volume (81) upstream of a cylinder (Ai, Bi) of the engine (10), wherein in the method
- the engine (10) is supplied with a fuel mixture comprising a charge mixture and the engine (10) is operated in gas operation with gas as fuel in the charge mixture,
wherein
- an output mixture fraction (m(')_G, ZYL), assigned to a later mixture state (p5, T5), of a gas-air mixture (G) is determined by means of an input mixture fraction (m(')_G, SOLL), assigned to at least one earlier mixture state (p0, T0), of the gas-air mixture (G), with a determination which takes place by means of an intake path model serving as the basis for a computational model for the intake path (30),
wherein with the determination
- (S1, S2, R4) the output mixture fraction (m(')_G, ZYL) of the gas-air mixture (G) is determined at an engine supply, and (S7, R0) the input mixture fraction (m(')_G, SOLL) of the gas-air mixture (G) is determined at the gas mixer (40) and (S8) an air flow and/or a gas flow at the gas mixer (40) is set in accordance with the input mixture fraction (m(')_G, SOLL),
- specifically, the input mixture fraction of the gas-air mixture is determined at an outlet of the gas mixer (40) and the output mixture fraction of the gas-air mixture is determined at a cylinder (Ai, Bi) or a cylinder inlet of the engine (10), wherein
- the input mixture fraction is determined from the output mixture fraction over a number of intermediate states of the mixture fraction in a number of assigned volumes of the intake path (30), wherein
- the determination of the input mixture fraction takes place by reverse calculation from the output mixture fraction, and
with the determination
- the mixture fraction is determined in the assigned volume of the intake path (30) for a number of real housing volumes of the intake path (30), wherein the number of intermediate states of the mixture fraction in the intake path (30) is assigned to at least one large volume of the intake path (30), and
a number of large volumes of the intake path (30) comprises one or more component volumes of the intake path (30) which comprises at least one receiver volume (V5, p5, T5, 81, 80) and an intercooler volume (V3, p3, T3, 62, 60), and
- a state pressure is determined on the basis of the computational model of the intake path (30) comprising (R45, R43) at least one computational volume of the receiver volume (V5, p5, T5, 81, 80) and of the intercooler volume (V3, p3, T3, 62, 60), wherein the state pressure is defined as the receiver pressure (p5) in the receiver volume (81) upstream of a cylinder (Ai, Bi) of the engine (10) which is arranged before the cylinder (Ai, Bi) in the upstream direction and is arranged after a forced-induction unit and/or a bypass path in the downstream direction.

2. Method according to Claim 1, **characterized in that** the input mixture fraction is determined from the output mixture fraction over the number of intermediate states of the mixture fraction in the number of assigned volumes of the intake path (30) in the course of a real-time determination simultaneous with the operation of the engine.

3. Method according to Claim 1 or 2, **characterized in that**
- the output mixture fraction of the gas-air mixture is determined at the receiver (80).

4. Method according to one of the preceding claims, **characterized in that** the determination of a mixture fraction comprises:
- the determination of a mixture mass flow by means of a throughflow equation for the volume of the intake path (30), wherein a mixture mass flow is assigned to the input mixture fraction at the gas mixer (40) and/or a mixture mass flow at the engine supply is assigned to the output mixture fraction; and/or
- the determination of a mixture state comprises at least the determination of a temperature and/or a state pressure of the mixture fraction for the assigned volume of the intake path (30) by means of a thermodynamic state equation for real or ideal gases in the assigned volume.

5. Method according to one of the preceding claims, **characterized in that** a combustion air ratio is assigned to the input mixture fraction, specifically a SETPOINT value of the combustion air ratio (Lambda_SOLL), wherein a gas metering unit of the gas mixer (40) is controlled by means of a stoichiometric air requirement (L_st) and/or by means of the combustion air ratio.

6. Method according to one of the preceding claims, **characterized in that** the determination of the mixture fraction, specifically a mixture mass flow and/or a mixture state of an intermediate state, takes place in the assigned volume of the intake path (30) for a number of theoretical computational volumes of the intake path (30), wherein the number of intermediate states of the mixture fraction in the intake path (30) is assigned to at least one large volume of the intake path (30).

7. Method according to one of the preceding claims, **characterized in that** the number of large volumes of the intake path (30) comprises a component volume of the intake path (30) which
- comprises at least one compressor volume (V2, p2, T2).

8. Method according to one of the preceding claims, **characterized in that** the state pressure is determined virtually, on the basis of the computational model of the intake path (30) comprising at least the computational volume of the receiver volume (V5, p5, T5, 81, 80) and of the intercooler volume (V3, p3, T3, 62, 60).

9. Method according to one of the preceding claims, **characterized in that** the state pressure is determined virtually, specifically is simulated and/or calculated.

10. Method according to one of the preceding claims, **characterized in that** the number of at least one large volume(s) of the intake path (30) comprises one or more component volumes of the intake path (30) which are chosen from the group further comprising:
- at least one compressor bypass volume (V1, p1, T1 to V3, p3, T3) at a bypass pipe section and/or a compressor bypass flap (72);
- at least one intake path volume at an intake pipe section and/or at an engine throttle flap and/or inlet throttle flap (82).

11. Method according to one of the preceding claims, **characterized in that** a mixture mass flow is determined at a throttle (72, 82), wherein a throughflow of a return flow (p3, T3, p1, T1) and/or of a forced-induction flow is determined, by means of a throughflow equation for compressible media at an ideal or real nozzle, assuming a flow of ideal or real gases which is frictionless or is subject to friction.

12. Method according to one of the preceding claims, **characterized in that** the gas operation is spark-ignition gas operation.

13. Control device with a controller (200) for a gas-fired internal combustion engine (100) with
- a gas mixer (40), an intake path (30) and
- an engine (10) with a number of cylinders (Ai, Bi) and a receiver (80) arranged upstream of the cylinders and with a receiver volume (81) arranged upstream of the cylinders (Ai, Bi) of the engine (10),
- a forced-induction unit for the intake path (30) with an intercooler (60), and
- with a bypass path for the intake path (30) for bypassing the forced-induction unit, wherein the engine (10) can be operated in gas operation with gas as fuel with a supplied fuel mixture comprising a charge mixture, and the control device with the controller (200) is designed:
- to determine an output mixture fraction (m(')_G, ZYL), assigned to a later mixture state (p5, T5), of a gas-air mixture (G) by means of an input mixture fraction (m(')_G, SOLL), assigned to at least one earlier mixture state (p0, T0), of the gas-air mixture (G) with a determination which takes place by means of an intake path model serving as the basis for a computational model for the intake path (30),
wherein the control device with the controller (200) is designed with a determination:
- (S1, S2, R4) to determine the output mixture fraction (m(')_G, ZYL) of the gas-air mixture (G) at an engine supply and to determine the input mixture fraction (m(')_G, SOLL) of the gas-air mixture (G) at the gas mixer (40), and to set an air flow and/or a gas flow at the gas mixer (40) in accordance with the input mixture fraction,
- specifically to determine the input mixture fraction of the gas-air mixture at an outlet of the gas mixer (40) and to determine the output mixture fraction of the gas-air mixture at a cylinder (Ai, Bi) or a cylinder inlet of the engine (10), wherein the input mixture fraction is determined from the output mixture fraction over a number of intermediate states of the mixture fraction in a number of assigned volumes of the intake path (30), wherein
- the determination of the input mixture fraction takes place by reverse calculation from the output mixture fraction, and
with the determination
- the mixture fraction is determined in the assigned volume of the intake path (30) for a number of real housing volumes of the intake path (30), wherein the number of intermediate states of the mixture fraction in the intake path (30) is assigned to at least one large volume of the intake path (30), and
a number of large volumes of the intake path (30) comprises one or more component volumes of the intake path (30) which comprises at least the receiver volume (V5, p5, T5, 81, 80) and an intercooler volume (V3, p3, T3, 62, 60), and
a state pressure is determined on the basis of the computational model of the intake path (30) comprising (R45, R43) at least one computational volume of the receiver volume (V5, p5, T5, 81, 80) and of the intercooler volume (V3, p3, T3, 62, 60), wherein the state pressure is defined as the receiver pressure (p5) in the receiver volume (81) upstream of a cylinder (Ai, Bi) of the engine (10) which is arranged before the cylinder (Ai, Bi) in the upstream direction and is arranged after a forced-induction unit and/or a bypass path in the downstream direction.

14. Internal combustion engine designed as a gas-fired internal combustion engine (100), with
- a gas mixer (40), an intake path (30) and
- an engine (10) with a number of cylinders (Ai, Bi) and a receiver (80) arranged upstream of the cylinders and with a receiver volume (81) arranged upstream of the cylinders (Ai, Bi) of the engine (10),
- a forced-induction unit for the intake path (30) with an intercooler (60), and
- with a bypass path for the intake path (30) for bypassing the forced-induction unit, and
- with a control device according to Claim 13 with the controller (200), wherein the engine (10) can be operated in gas operation with gas as fuel with a supplied fuel mixture comprising a charge mixture.

15. Internal combustion engine designed as a gas-fired internal combustion engine (100), according to Claim 14, **characterized in that**
- the gas-fired internal combustion engine (100) is designed as a spark-ignition gas-fired internal combustion engine, and/or
- the forced-induction unit for the intake path (30) with the intercooler (60) is designed as a one- or two-stage forced-induction unit and optionally with exhaust-gas recirculation.

## Revendications

1. Procédé d'exploitation d'un moteur à combustion interne à gaz (100), avec
- un mélangeur de gaz (40), une section d'admission (30), un échangeur de chaleur de charge (60), et
- un moteur (10) avec un certain nombre de cylindres (Ai, Bi), et un récepteur (80) avec un volume de réception (81) devant un cylindre (Ai, Bi) du moteur (10), dans lequel dans le procédé
- le moteur (10) est alimenté par un mélange de carburant comprenant un mélange de charge, et le moteur (10) fonctionne en mode gaz avec du gaz comme carburant dans le mélange de charge,
dans lequel
- au moyen d'au moins un état de mélange antérieur (p0, T0) associé à une proportion de mélange d'entrée (m (')_G, SOLL) d'un mélange gaz-air (G), une proportion de mélange de sortie (m(')_G, ZYL) du mélange gaz-air (G) associée à un état de mélange ultérieur (p5, T5) est déterminée, avec une détermination qui est effectuée au moyen d'un modèle de section d'admission servant de base à un modèle de calcul pour la section d'admission (30),
dans lequel, avec la détermination
- (S1, S2, R4) la proportion du mélange de sortie (m (')_G, ZYL) du mélange gaz-air (G) est déterminée au niveau d'une alimentation du moteur, et (S7, R0) la proportion du mélange d'entrée (m(')_G, SOLL) du mélange gaz-air (G) est déterminée au niveau du mélangeur de gaz (40), et (S8) un flux d'air et/ou un flux de gaz est réglé au niveau du mélangeur de gaz (40) en fonction de la proportion du mélange d'entrée (m(')_G, SOLL),
- la proportion du mélange d'entrée du mélange gaz-air est déterminée à une sortie du mélangeur de gaz (40) et la proportion du mélange de sortie du mélange gaz-air est déterminée au niveau d'un cylindre (Ai, Bi) ou d'une entrée de cylindre du moteur (10), où
- la proportion du mélange d'entrée de la proportion du mélange de sortie est déterminée par un certain nombre d'états intermédiaires de la proportion du mélange dans un certain nombre de volumes associés de la section d'admission (30), la détermination de la proportion du mélange d'entrée étant effectuée par rétro-calcul de la proportion du mélange de sortie, et
avec la détermination
- la proportion de mélange dans le volume associé de la section d'admission (30) est déterminée pour un certain nombre de volumes réels de la section d'admission (30), le nombre d'états intermédiaires de la proportion de mélange dans la section d'admission (30) étant associé à au moins un grand volume de la section d'admission (30), et
un certain nombre de grands volumes de la section d'admission (30) comprenant un ou plusieurs volumes composants de la section d'admission (30) comprenant au moins un volume de réception (V5, p5, T5, 81, 80) et un volume d'échangeur de chaleur de charge (V3, p3, T3, 62, 60), et
- une pression d'état est déterminée sur la base du modèle de calcul de la section d'admission (30) comprenant (R45, R43) au moins un volume de calcul du volume de réception (V5, p5, T5, 81, 80) et du volume de l'échangeur de chaleur de charge (V3, p3, T3, 62, 60), la pression d'état est définie comme la pression de réception (p5) dans le volume de réception (81) devant un cylindre (Ai, Bi) du moteur (10) qui est placé en amont du cylindre (Ai, Bi) dans le sens de l'écoulement et en aval d'une charge et/ou d'une section de dérivation dans le sens de l'écoulement.

2. Procédé selon la revendication 1, **caractérisé en ce que** la proportion de mélange d'entrée est déterminée à partir de la proportion de mélange de sortie par le nombre d'états intermédiaires de la proportion de mélange dans le nombre de volumes associés de la section d'admission (30) dans le cadre d'une détermination en temps réel simultanée au fonctionnement du moteur.

3. Procédé selon la revendication 1 ou 2, **caractérisé en ce que** la proportion de mélange de sortie du mélange gaz-air est déterminée au niveau de réception (80).

4. Procédé selon l'une des revendications précédentes, **caractérisé en ce que** la détermination d'une proportion de mélange comprend :
- la détermination d'un débit massique de mélange au moyen d'une équation de débit pour le volume de la section d'admission (30), un débit massique de mélange étant associé à la proportion de mélange d'entrée au niveau du mélangeur de gaz (40) et/ou à la proportion de mélange de sortie dans le débit massique de mélange au niveau de l'alimentation du moteur ; et/ou
- la détermination d'un état de mélange comprend au moins la détermination d'une température et/ou d'une pression d'état de la proportion de mélange pour le volume associé de la section d'admission (30) au moyen d'une équation d'état thermodynamique de gaz réels ou idéaux dans le volume associé.

5. Procédé selon l'une des revendications précédentes, **caractérisé en ce qu'**un rapport air-carburant est affecté à la proportion de mélange d'entrée, à savoir une valeur de consigne du rapport air-carburant (Lambda_SOLL), une unité de dosage de gaz du mélangeur de gaz (40) étant guidée au moyen d'un besoin en air stœchiométrique (L_st) et/ou du rapport air-carburant.

6. Procédé selon l'une des revendications précédentes, **caractérisé en ce que** la détermination de la proportion de mélange, à savoir un débit massique de mélange et/ou un état de mélange d'un état intermédiaire, dans le volume associé de la section d'admission (30) pour un certain nombre de volumes de calcul théorique de la section d'admission (30) a lieu, le nombre d'états intermédiaires de la proportion de mélange dans la section d'admission (30) étant associé à au moins un grand volume de la section d'admission (30).

7. Procédé selon l'une des revendications précédentes, **caractérisé en ce que** le nombre de grands volumes de la section d'admission (30) comprend un volume composant de la section d'admission (30) qui comprend au moins un volume de compresseur (V2, p2, T2).

8. Procédé selon l'une des revendications précédentes, **caractérisé en ce que** la pression d'état est déterminée virtuellement, sur la base du modèle de calcul de la section d'admission (30) comprenant au moins le volume de calcul du volume de réception (V5, p5, T5, 81, 80) et le volume de l'échangeur de chaleur de charge (V3, p3, T3, 62, 60).

9. Procédé selon l'une des revendications précédentes, **caractérisé en ce que** la pression d'état est déterminée virtuellement, c'est-à-dire simulée et/ou calculée.

10. Procédé selon l'une des revendications précédentes, **caractérisé en ce que** le nombre d'au moins un grand volume de la section d'admission (30) comprend un ou plusieurs volumes composants de la section d'admission (30) qui sont choisis dans le groupe comprenant en outre :
- au moins un volume de dérivation du compresseur (V1, p1 T1 à V3, p3, T3) au niveau d'une section de tuyau de dérivation et/ou un clapet de dérivation du compresseur (72) ;
- au moins un volume de section d'admission au niveau d'une section de tuyau d'admission et/ou un clapet d'étranglement du moteur et/ou d'entrée (82).

11. Procédé selon l'une des revendications précédentes, **caractérisé en ce qu'**un débit massique de mélange est déterminé au niveau d'un étrangleur (72, 82), un débit d'un reflux (p3, T3, p1, T1) et/ou d'un flux de charge étant déterminé au moyen d'une équation de débit de fluides compressibles sur une buse idéale ou réelle, en supposant un écoulement sans frottement ou avec frottement de gaz idéaux ou réels.

12. Procédé selon l'une des revendications précédentes, **caractérisé en ce que** le fonctionnement au gaz est un fonctionnement au gaz à allumage par étincelle.

13. Dispositif de régulation avec un régulateur (200) pour un moteur à combustion interne à gaz (100) avec
- un mélangeur de gaz (40), une section d'admission (30) et
- un moteur (10) avec un certain nombre de cylindres (Ai, Bi) et un récepteur (80) disposé en amont des cylindres avec un volume de réception (81) disposé devant les cylindres (Ai, Bi) du moteur (10), une charge de la section d'admission (30) avec un échangeur de chaleur de charge (60), et
- avec une section de dérivation de la section d'admission (30) pour contourner la charge, le moteur (10) pouvant être actionné avec un mélange de carburant fourni comprenant un mélange de charge avec du gaz comme carburant en mode gaz, et le dispositif de régulation étant formé avec le régulateur (200) :
- au moyen d'au moins un état de mélange antérieur (p0, T0) associé à une fraction de mélange d'entrée (m(')_G, SOLL) d'un mélange gaz-air (G) pour déterminer une fraction de mélange de sortie (m(')_G, ZYL) du mélange gaz-air (G) associée à un état de mélange ultérieur (p5, T5) avec une détermination qui est effectuée au moyen d'un modèle de section d'admission servant de base à un modèle de calcul pour la section d'admission (30),
dans lequel le dispositif de régulation est conçu avec le régulateur (200) avec une détermination :
(S1, S2, R4) pour déterminer la proportion du mélange de sortie (m(')_G, ZYL) du mélange gaz-air (G) au niveau d'une alimentation du moteur et pour déterminer la proportion du mélange d'entrée (m(')_G, SOLL) du mélange gaz-air (G) au niveau du mélangeur de gaz (40), et pour régler un flux d'air et/ou un flux de gaz au niveau du mélangeur de gaz (40) en fonction de la proportion du mélange d'entrée,
- la proportion du mélange d'entrée du mélange gaz-air est déterminée à une sortie du mélangeur de gaz (40) et la proportion du mélange de sortie du mélange gaz-air est déterminée au niveau d'un cylindre (Ai, Bi) ou une entrée de cylindre du moteur (10), où
- la proportion du mélange d'entrée de la proportion du mélange de sortie est déterminée par un certain nombre d'états intermédiaires de la proportion du mélange dans un certain nombre de volumes associés de la section d'admission (30), la détermination de la proportion du mélange d'entrée étant effectuée par rétro-calcul de la proportion du mélange de sortie, et
avec la détermination
- la proportion de mélange dans le volume associé de la section d'admission (30) est déterminée pour un certain nombre de volumes réels de la section d'admission (30), le nombre d'états intermédiaires de la proportion de mélange dans la section d'admission (30) étant associé à au moins un grand volume de la section d'admission (30), et
- un certain nombre de grands volumes de la section d'admission (30) comprenant un ou plusieurs volumes composants de la section d'admission (30) comprenant au moins un volume de réception (V5, p5, T5, 81, 80) et un volume d'échangeur de chaleur de charge (V3, p3, T3, 62, 60), et
- une pression d'état est déterminée sur la base du modèle de calcul de la section d'admission (30) comprenant (R45, R43) au moins un volume de calcul du volume de réception (V5, p5, T5, 81, 80) et du volume de l'échangeur de chaleur de charge (V3, p3, T3, 62, 60), la pression d'état est définie comme la pression de réception (p5) dans le volume de réception (81) devant un cylindre (Ai, Bi) du moteur (10) qui est placé en amont du cylindre (Ai, Bi) dans le sens de l'écoulement et en aval d'une charge et/ou d'une section de dérivation dans le sens de l'écoulement.

14. Moteur à combustion interne conçu comme un moteur à combustion interne à gaz (100), avec un mélangeur de gaz (40), une section d'admission (30) et
un moteur (10) avec un certain nombre de cylindres (Ai, Bi) et un récepteur (80) disposé en amont des cylindres avec un volume de réception (81) disposé devant les cylindres (Ai, Bi) du moteur (10), une charge de la section d'admission (30) avec un échangeur de chaleur de charge (60), et
avec une ligne de dérivation de la section d'admission (30) pour contourner la charge, et
avec un dispositif de régulation selon la revendication 13 avec le régulateur (200), le moteur (10) pouvant être utilisé avec un mélange de carburant alimenté comprenant un mélange de charge avec du gaz comme carburant en mode gaz.

15. Moteur à combustion interne conçu comme un moteur à combustion interne à gaz (100), selon la revendication 14, **caractérisé en ce que** le moteur à combustion interne à gaz (100) est conçu comme un moteur à combustion interne à gaz à allumage par étincelle, et/ou
- la charge de la section d'admission (30) avec l'échangeur de chaleur de charge (60) est conçue comme une charge à un ou deux étages et est éventuellement conçue avec une recirculation des gaz d'échappement.
